# EUROPEAN PATENT SPECIFICATION

(11) **EP 2 826 974 B1**
(45) Date of publication and mention of the grant of the patent: **02.08.2017**
(21) Application number: 13761112.5
(22) Date of filing: 13.03.2013
(51) Int. Cl.: F02M 25/00, F01N 3/24, B01D 53/94, F01N 3/08, F01N 3/10, F01N 3/28

(54) **EXHAUST GAS PURIFICATION DEVICE**
ABGASREINIGUNGSVORRICHTUNG
DISPOSITIF DE PURIFICATION DE GAZ D'ÉCHAPPEMENT

(30) Priority: 13.03.2012 JP 2012056026
(43) Date of publication of application: 21.01.2015
(73) Proprietor: Isuzu Motors, Ltd., Tokyo 140-8722 (JP)
(72) Inventor: OSUMI, Kazuo, Fujisawa-shi Kanagawa 252-0881 (JP)
(74) Representative: Schaumburg und Partner Patentanwälte mbB
(86) International application number: PCT/JP2013/056990
(87) International publication number: WO 2013/137309

(56) References cited:
- EP-A1- 1 939 422
- EP-A1- 2 851 527
- WO-A1-2006/029808
- WO-A1-2011/090189
- WO-A1-2011/090189
- JP-A- 2009 074 543
- JP-A- 2011 111 945
- KR-A- 20110 062 066
- US-A1- 2009 249 773
- US-A1- 2011 146 268

## Description

### TECHNICAL FIELD

The present invention relates to an exhaust gas purification device that removes PM (Particulate Matter) and NOx from an exhaust gas discharged from a diesel engine or the like.

### BACKGROUND ART

From a viewpoint of global environment preservation and protection, an exhaust gas regulation (emission control) is more strictly applied on an exhaust gas discharged from automobiles.

With regard to diesel engine, in particular, there is a demand for reduction in the PM and NOx discharged from the diesel engines. A DPF (Diesel Particulate Filter) is used for reducing the PM, and a urea SCR (Selective Catalytic Reduction) unit, HC-SCR (Hydro Carbon-Selective Catalytic Reduction) unit, LNT (Lean NOx Trap) and the like are used for reducing NOx.

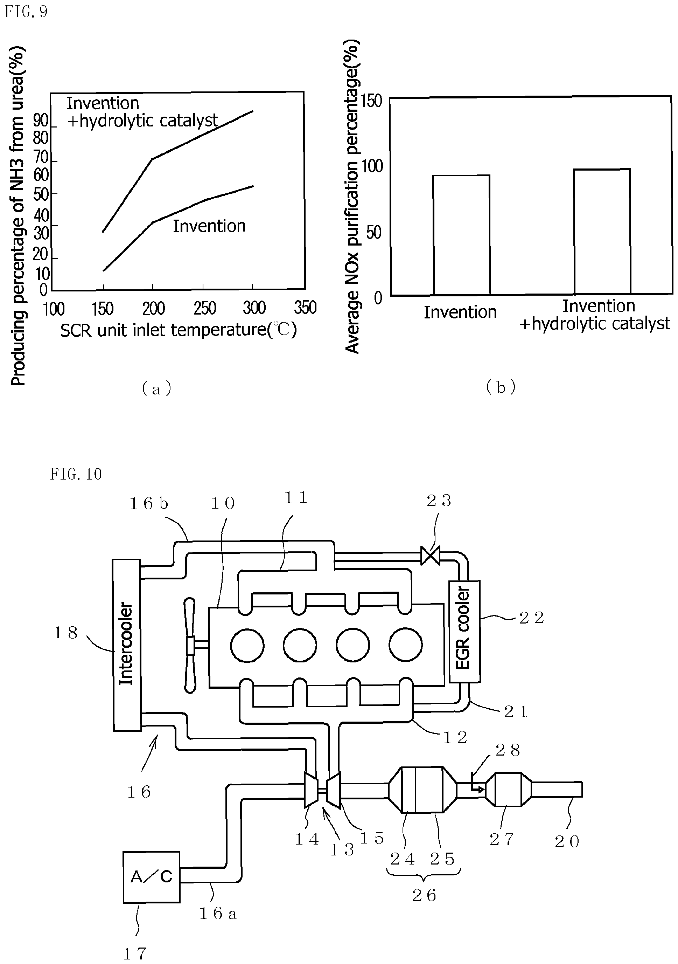

A conventional exhaust gas purification device used in an intake and exhaust system of a diesel engine equipped with a turbocharger will be described with reference to Fig. 10.

An intake manifold 11 and an exhaust manifold 12 of a diesel engine 10 are connected to a compressor 14 and a turbine 15 of a turbocharger 13, respectively. An air filtered through an air cleaner 17 is introduced (sucked) into the compressor 14 via an upstream intake pipe 16a and pressurized by the compressor 14. Then, the air flows through an intercooler 18 provided on a downstream intake pile 16b and cooled by the intercooler 18. The cooled air is supplied to the diesel engine 10 from the intake manifold 11. An exhaust gas from the diesel engine 10 is used to drive the turbine 15, and then expelled to an exhaust pipe 20. An EGR (Exhaust Gas Recirculation) pipe 21 is connected between the exhaust pipe 20 and the upstream intake pipe 16a to return part of the exhaust gas to the intake path of the engine 10 so as to reduce NOx. An EGR cooler 22 and EGR valve 23 are provided on the EGR pipe 21.

A PM removing unit 26, which includes an oxidation catalyst (DOC) 24 on the upstream side and a DPF 25 on the downstream side, and an SCR unit 27 are provided on the exhaust pipe 20. A urea spraying nozzle 28 is attached to the exhaust pipe 20 at a position upstream of the SCR unit 27.

The exhaust gas which is discharged from the turbine 15 and flows in the exhaust pipe 20 is processed by the upstream oxidation catalyst (DOC) 24 to eliminate (purify) CO and HC from the exhaust gas, oxidize NO, and burn SOF (Soluble Organic Fraction), and is further processed by the downstream DPF 25 to collect and remove the PM. Then, the urea contained in the urea water injected from the urea spraying nozzle 28 is hydrolyzed to NH₃ by the SCR unit 27. NH₃ facilitates the reduction (deoxidization) of NOx in the exhaust gas to nitrogen and oxygen to purify the exhaust gas (NOx purification).

In this exhaust gas purification device, the DPF 25 may be clogged up with the PM, which is collected by the DPF 25. When a pressure difference across the DPF 25 becomes equal to or greater than a predetermined value, a post-injection is carried out in the diesel engine 10 or an exhaust pipe injection is carried out at a position downstream of the diesel engine 10 in order to increase the exhaust gas temperature to a regeneration-possible temperature and burn the PM accumulated in the DPF 25, i.e., the regeneration of the DPF is performed.

### LISTING OF REFERENCES

PATENT LITERATURE 1: Japanese Patent Application Laid-Open Publication (Kokai) No. 2009-299499
PATENT LITERATURE 2: Japanese Patent Application Laid-Open Publication (Kokai) No. 2011-69226
PATENT LITERATURE 3: Japanese Patent Application Laid-Open Publication (Kokai) No. 08-189336

### SUMMARY OF THE INVENTION

### PROBLEMS TO BE SOLVED BY THE INVENTION

Recent engines are operated with improved combustion, and achieve the increase in fuel efficiency (fuel consumption rate) and the reduction in the total amount of PM and NOx discharged, but suffer from the drop in the exhaust gas temperature.

As a result, the inlet temperature of the DPF 25 cannot be maintained at the temperature for continuous regeneration (250-500 degrees C), and therefore the automatic regeneration interval becomes shorter.

In addition, because the decomposition temperature (melting point) of urea is 132.7 degrees C, the decomposition of urea is not facilitated if the exhaust gas temperature is low (equal to or lower than 175 degrees C). In this case, it is not possible to inject urea into the SCR unit 27, and therefore the NOx purification efficiency would drop.

If a mode for measuring the exhaust gas changes to a WHDC (Worldwide harmonized Heavy Duty Certification) mode from a conventional mode, i.e., JE05, NEDC (New European Driving Cycle) or the like, an exhaust gas reduction and purification technique that is suitable for a cold mode and/or under a high temperature-high flow rate condition is also required.

Various proposals are made to cope with such demand. For example, a post-treatment (post-processing) device may be provided in the vicinity of the engine (i.e., the post-treatment device is located immediately under the turbocharger), a heat capacity of the post-treatment device may be reduced (e.g., the post-treatment device is downsized), and the post-treatment device may be thermally insulated to keep the high temperature. In the current status, however, upsizing the post-treatment device (use of a large-scale post-treatment device) is inevitable. This creates problems such as difficulty in finding a suitable place for installation, an adverse influence on the fuel efficiency due to the increased weight, and an increased cost.

To reduce NOx, Patent Literature 1 (Japanese Patent Application Laid-Open Publication No. 2009-299499) uses two-stage turbochargers, and Patent Literature 2 (Japanese Patent Application Laid-Open Publication No. 2011-69226) proposes a configuration in which one of a high-pressure EGR for recirculating the exhaust gas from the exhaust manifold upstream of the turbine of the turbocharger, into the intake manifold, and a low-pressure EGR for recirculating the exhaust gas downstream of the turbine into the compressor of the turbocharger is selectively used (switched) in accordance with the engine load.

However, when the DPF is located between the two turbochargers as in Patent Literature 1, a larger influence is exerted on the engine. Patent Literature 2 must place the DPF downstream of the turbocharger but the exhaust gas temperature drops downstream of the turbocharger.

Patent Literature 3 (Japanese Patent Application Laid-Open Publication No. 08-189336) proposes the direct installation of the DPF in the exhaust manifold, but the exhaust manifold should be made from a ceramics material, and therefore Patent Literature 3 has a problem of complicated structure.

An exhaust gas purification device according to the preamble of claim 1 is disclosed in WO 2011/090189 A1.

WO 2006/029808 A1 discloses an exhaust gas purification device including a particle filter and a single oxidation catalyst. This device further includes a urea spraying nozzle being located upstream of the filter, immediately upstream of a turbocharger or immediately downstream of a SCR unit.

Thus, an object of the present invention is to overcome the above-described problems, and provide an exhaust gas purification device that can have a high exhaust gas temperature at the DPF inlet.

### SOLUTION TO OVERCOME THE PROBLEMS

In order to achieve the above-mentioned object, the present invention provides an exhaust gas purification device according to claim 1.

According to the present invention, there is provided an exhaust gas purification device that includes a plurality of upstream DOC arranged at a plurality of exhaust ports of an engine respectively, a downstream DOC and a DPF located between an exhaust manifold and a turbocharger, a urea spraying nozzle arranged between the downstream DOC and the DPF, and an SCR unit arranged on an exhaust gas pipe downstream of the turbocharger.

In the present invention, a catalyst layer in each upstream DOC preferably includes a catalyst that contains a material having an OSC (Oxygen Storage Capacity) and an oxide semiconductor. The OSC is excellent in CO purification. A catalyst layer in the downstream DOC preferably includes a metallic catalyst that is excellent in HC purification.

In the present invention, alternatively, the catalyst layer in each upstream DOC preferably includes a catalyst that contains a mixture of an oxide having the OSC and an oxide semiconductor. The catalyst layer in the downstream DOC preferably includes a catalyst that contains a mixture of an HC absorbing material and a noble metal catalyst.

In the present invention, the oxide having the OSC is preferably an oxide containing Ce, and the oxide semiconductor is preferably made from TiO₂, ZnO or Y₂O₃.

In the present invention, it is preferred that the exhaust gas purification device includes a high-pressure EGR pipe that returns the exhaust gas from the exhaust manifold to the intake side of the engine, and a low-pressure EGR pipe that returns the exhaust gas downstream of the SCR unit to the intake side of the compressor of the turbocharger.

In the present invention, it is preferred that urea is injected from the urea spraying nozzle, ammonia is generated from urea, part of the ammonia reacts with Sox in the exhaust gas to produce ammonium sulfate, the PM is burned in the downstream DPF, the resulting ash component (i.e., calcium carbonate) reacts with ammonium sulfate to produce ammonium carbonate and calcium sulfate, the ammonium carbonate is thermally decomposed to ammonia, and the resulting ammonia is used in a NOx purification reaction in the SCR unit.

### ADVANTAGES OF THE INVENTION

The present invention has the following remarkable advantages.

(1) Because the DPF is situated upstream of the turbocharger, it is possible to maintain the DPF temperature at a higher value than the conventional configuration. Thus, the frequency of continuous regeneration can be increased. In addition, because the HC absorption and oxidation control is applied to the DOC, it is possible to extend the automatic regeneration interval. Because the DPF can be made compact, it is possible to reduce the time spent for elevating the temperature in the regeneration process. Because of these advantages, it is possible to reduce an amount of CO₂ discharged during the DPF regeneration process.
(2) Because the DPF is located upstream of the turbocharger, the downsizing becomes possible, and a degree of freedom (flexibility) in layout increases.
(3) Because the DPF is located upstream of the turbocharger and closer to the engine than the turbocharger, the DPF is not influenced by an ash component derived from an oil of the turbocharger. This is advantageous to the DPF in terms of clogging up.
(4) Because the exhaust gas to be recirculated by EGR is taken immediately after the DOC, which is upstream of the turbocharger, and immediately after the SCR unit, which is in the vicinity of the engine, it is possible to reduce the length of the EGR path. This is also effective for EGR antifouling.
(5) It is possible to provide an exhaust gas purification device that can effectively use the heat of the exhaust gas.

### BRIEF DESCRIPTION OF THE DRAWINGS

Fig. 1 illustrates one embodiment not according to the present invention.
Fig. 2 illustrates an embodiment according to the present invention.
Fig. 3 is a set of views illustrating various characteristics of an exemplary embodiment of the present invention and a conventional configuration with respect to the reducing percentage of the DPF diameter. Specifically, Fig. 3(a) shows relationship between the reducing percentage of the DPF diameter and the DPF pressure loss, Fig. 3(b) shows relationship between the reducing percentage of the DPF diameter and the exhaust manifold pressure, and Fig. 3(c) shows relationship between the reducing percentage of the DPF diameter and the torque.
Fig. 4 shows a chronological change of the DPF inlet temperature of the exemplary embodiment of the present invention and the conventional configuration when measured in the JE05 mode.
Fig. 5 depicts the time needed to increase the DPF temperature in the exemplary embodiment of the present invention and the conventional configuration.
Fig. 6 is a set of views useful to describe the continuous regeneration of the DPF according an exemplary embodiment of the present invention, including the flowchart of the continuous regeneration control.
Fig. 7 is a set of diagrams useful to compare the exemplary embodiment of the present invention and the conventional configuration with respect to the DPF regeneration interval and an amount of discharged CO₂.
Fig. 8 is a set of diagrams useful to compare the exemplary embodiment of the present invention and the conventional configuration with respect to the ammonia generation percentage and the NOx purification percentage.
Fig. 9 is a set of diagrams useful to compare the embodiment of Fig. 1 and the embodiment of Fig. 2 with respect to the ammonia generation percentage and the NOx purification percentage.
Fig. 10 shows the conventional exhaust gas purification device.

### MODE FOR CARRYING OUT THE INVENTION

A preferred embodiment of the present invention will be described in detail with reference to the accompanying drawings.

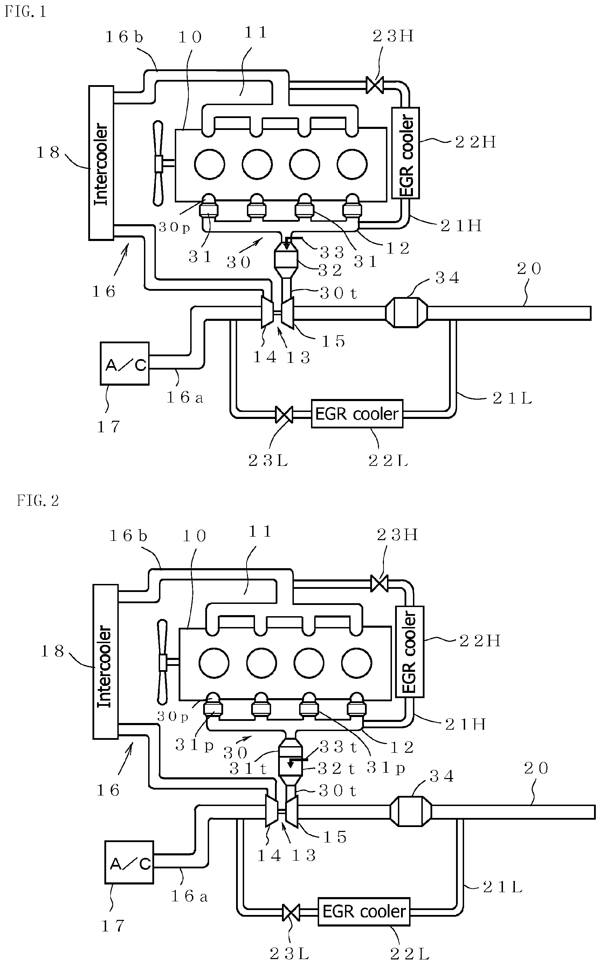

Fig. 1 illustrates an exhaust gas purification device not according to the present invention. An intake and exhaust system around a diesel engine in this embodiment is the same as Fig. 10, and therefore the same reference numerals are used to describe a fundamental configuration of the intake and exhaust system of Fig. 1.

An intake manifold 11 and an exhaust manifold 12 of a diesel engine 10 are coupled to a compressor 14 and a turbine 15 of a turbocharger 13, respectively. An air filtered through an air cleaner 17 is introduced (sucked) into the compressor 14 via an upstream intake pipe 16a and pressurized by the compressor 14. Then, the air flows through an intercooler 18 provided on a downstream intake pipe 16b and cooled by the intercooler 18. The cooled air is supplied to the diesel engine 10 from the intake manifold 11. An exhaust gas from the diesel engine 10 is used to drive the turbine 15, and then expelled to an exhaust pipe 20. A high-pressure EGR (Exhaust Gas Recirculation) pipe 21H is connected between the exhaust pipe 20 and the upstream intake pipe 16a to return part of the exhaust gas to the intake path of the engine 10 so as to reduce NOx. An EGR cooler 22H and EGR valve 23H are provided on the EGR pipe 21H.

In this embodiment, a plurality of DOC 31 and a DPF 32 are provided on an exhaust path 30 that extends from the exhaust side of the engine 10 to the turbocharger 13. A urea spraying nozzle 33 is provided on the exhaust path 30 upstream of the DPF 32. An SCR unit 34 is provided on the exhaust pipe 20 downstream of the turbine 15.

Specifically, the DOC 31 are connected to a plurality of (upstream) exhaust port 30p of the diesel engine 10 respectively, which are situated on the upstream side of the exhaust path 30. Those parts of the exhaust ports 30p, which are downstream of the DOC 31, merge into the exhaust manifold 12. The DPF 32 is connected to an exhaust pipe 30t that connects the exhaust manifold 12 to the turbocharger 13. The urea spraying nozzle 33 is provided upstream of the DPF 32 to inject the urea water into the DPF 32. The SCR unit 34 is only filled with a selective reduction catalyst. The urea spraying nozzle is not arranged immediately upstream of the SCR unit 34. The urea spraying nozzle 33 upstream of the DPF 32 is used as an ammonia source.

In Fig. 1, the high-pressure EGR pipe 21H connects the exhaust manifold 12 to the intake manifold 11, and a low-pressure EGR pipe 21L connects the exhaust pipe 20 downstream of the SCR unit 34 to the upstream intake pipe 16a. An EGR cooler 22L and ERG valve 23L are connected to the ERG pipe 21L.

In a catalyst layer of each DOC 31, there is provided a catalyst that contains a material (e.g., CeO₂, ZrO₂ and the like) having an OSC (Oxygen Storage Capacity) and an oxide semiconductor. The OSC is excellent in HC oxidation and CO purification.

An embodiment of the present invention will be described with reference to Fig. 2.

The exhaust gas purification device shown in Fig. 2 is fundamentally the same as Fig. 1, but the DOC connected to the respective exhaust ports 30p of the diesel engine 10 are referred to as upstream DOC 31p. A downstream DOC 31t is provided on the exhaust pipe 30t that connects the exhaust manifold 12 to the turbocharger 13. The DPF 32t is integral with the downstream DOC 31t. The urea spraying nozzle 33t is provided between the downstream DOC 31t and the DPF 32t to inject the urea water into the DPF 32t.

In a catalyst layer of each upstream DOC 31p, there is provided a catalyst that contains a material (e.g., CeO₂, ZrO₂ and the like) having an OSC and an oxide semiconductor (TiO₂, ZnO, Y₂O₃, and the like). The OSC is excellent in purification of CO contained in the exhaust gas. In a catalyst layer of the downstream DOC 31t, a Pt catalyst that is excellent in HC purification is contained. Accordingly, a catalyst configuration that is excellent in low temperature activation is obtained.

Now, the exhaust gas purification according to the embodiment of the present invention will be described.

An exhaust gas from the diesel engine 10 flows through the DOC 31 (31p, 31t) so that HC contained in the exhaust gas is absorbed by the DOC, and the PM contained in the exhaust gas is caught by the downstream DPF 32 (32t).

Urea water is sprayed from the urea spraying nozzle 33 (33t) on the upstream side of the DPF 32 (32t) and urea is hydrolyzed to ammonia (NH₃). The DPF 32 (32t) includes a ceramic filter and other components to collect the PM. In order to prevent the oxidation of urea, the ceramic filter may not be coated with a strong oxidation catalyst (e.g., noble metal catalyst), and/or the ceramic filter may be coated with a hydrolytic catalyst to facilitate the hydrolysis of urea.

Ammonia decomposed in the DPF 32 (32t) is stirred in the turbocharger 13, and fed to the SCR unit 34 to reduce (deoxidize) NOx for removal of NOx.

Part of ammonia, which is sprayed upstream of the DPF 32 (32t) and decomposed, reacts with SOx contained in the exhaust gas to generate ammonium sulfate as shown below.

2NH₃ + H₂O + SO₃ → (NH₄)₂SO₄

The ammonium sulfate ((NH₄)₂SO₄) reacts with an ash component (i.e., CaCO₃), which is generated after the PM is burned in the downstream DPF 32 (32t), to generate ammonium carbonate as shown below.

(NH₄)₂SO₄ + CaCO₃ → (NH₄)₂CO₃ + CaSO₄

Ammonium carbonate ((NH₄)₂CO₃) decomposes at 58 degrees C which is lower than the hydrolytic temperature of urea (132.7 degrees C), and generates NH₃ as shown below.

(NH₄)₂CO₃ → 2NH₃ + H₂O + CO₂

Ammonia is caught by the downstream SCR unit 34 and used for a NOx purification reaction.

As described above, urea is injected upstream of the DPF 32 (32t) and a sufficient temperature to decompose urea is obtained in the embodiment of the present invention whereas the urea water is injected upstream of the SCR unit and hydrolyzed at the temperature of the exhaust gas to produce ammonia in the conventional arrangement. If the exhaust gas temperature is low in the conventional arrangement, therefore, the urea injection may not be carried out and a sufficient NOx removal rate (percentage) may not be achieved. In the embodiment of the present invention, part of the resulting ammonia reacts with calcium carbonate, which is produced during the regeneration of the DPF 32 (32t) and caught by the DPF 32 (32t), to become calcium sulfate and ammonium carbonate. Calcium sulfate remains in the DPF 32 (32t), and ammonium carbonate is thermally decomposed to produce ammonia. The resulting ammonia can be used for the NOx purification in the SCR unit 34.

In the embodiment of the present invention, HC absorbed by the DOC 31 (31p, 31t) can be used as auxiliary heat during the regeneration of the DPF 32 (32t) by taking advantage of separation and oxidation upon the exhaust gas temperature increase that is caused by the post injection of the diesel engine 10 (or exhaust pipe injection) during the regeneration of the DPF 32 (32t).

Accordingly, the DPF 32 (32t) can have a reduced volume as compared to the conventional DPF.

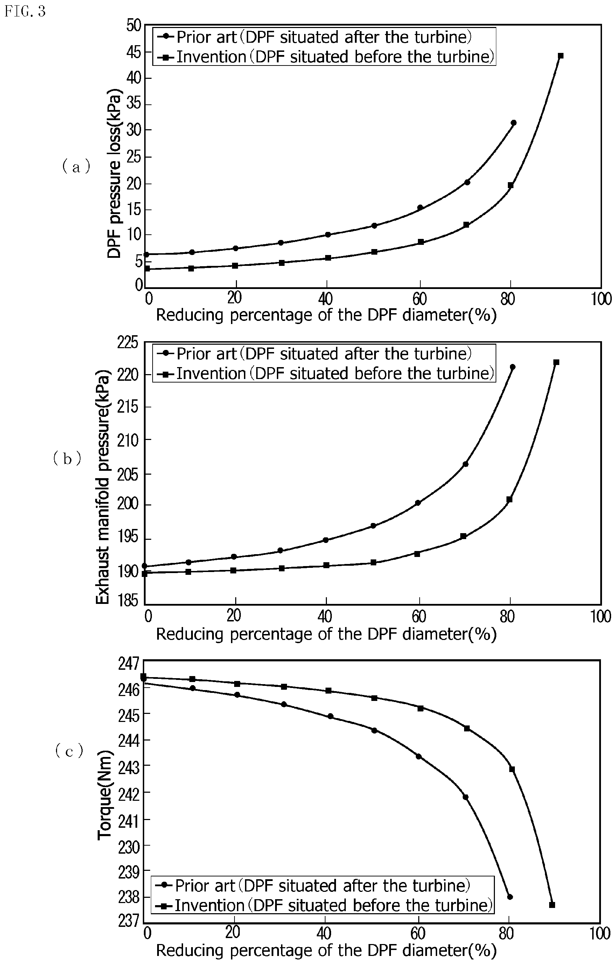

Fig. 3 is a set of diagrams illustrating relationship (comparison) between an exemplary embodiment of the present invention and a conventional configuration with respect to a reducing percentage of the DPF diameter, a DPF pressure loss, a torque, a exhaust manifold pressure and other factors. Specifically, Fig. 3(a) shows relationship between the reducing percentage of the DPF diameter and the DPF pressure loss, Fig. 3(b) shows relationship between the reducing percentage of the DPF diameter and the exhaust manifold pressure, and Fig. 3(c) shows relationship between the reducing percentage of the DPF diameter and the torque.

As understood from Fig. 3, when influences on the engine performances are the same, the exemplary embodiment of the present invention can relatively reduce influences on the DPF pressure loss, the torque, the exhaust manifold pressure, as compared to the conventional configuration, because there are no influences from a turbine expansion ratio in the exemplary example of the present invention. Thus, the exemplary embodiment of the present invention can reduce the DPF diameter about 40% as compared to the conventional configuration if the DPF has the same length.

In other words, because the DPF is located downstream of the turbine in the conventional arrangement, the DPF pressure loss occurs and the DPF has a large volume. In the present invention, on the other hand, the DPF is located upstream of the turbine, and therefore the DPF volume can be reduced by an amount corresponding to the decrease in the turbine outlet pressure.

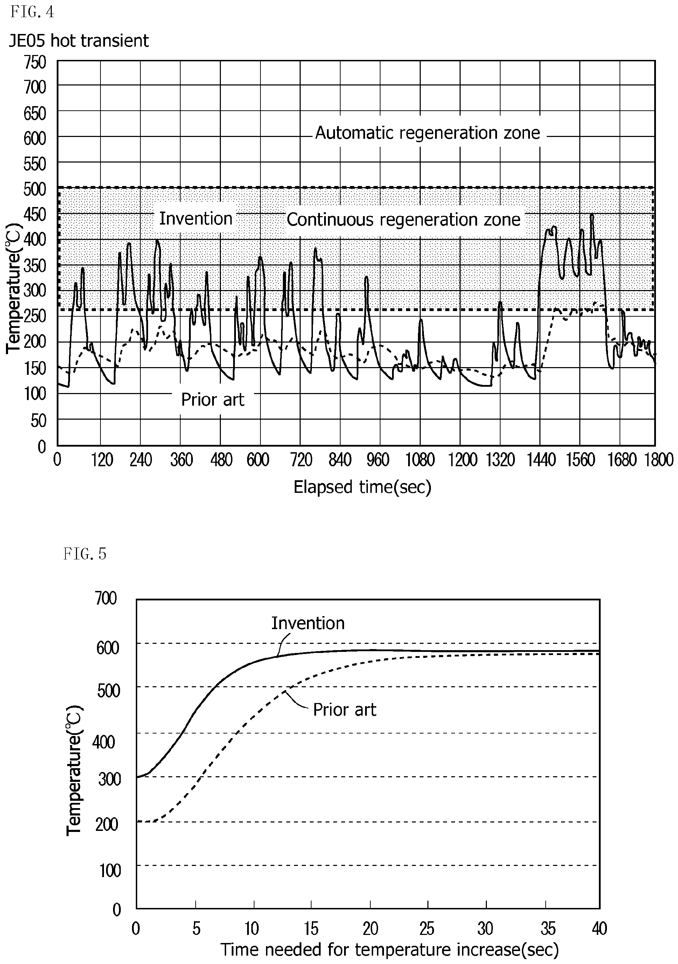

Fig. 4 depicts the changing temperature at the DPF inlet over time according to the exemplary example of the present invention and the conventional configuration.

Because the DPF is installed upstream of the turbocharger in the exemplary example of the present invention, the DPF is situated closer to the engine, as compared to the conventional arrangement. As understood from Fig. 4, it is possible to maintain the DPF inlet temperature 100 degrees C (or more) higher in the exemplary example of the present invention than the DPF inlet temperature (250 degrees C or lower) of the conventional arrangement.

The continuous regeneration zone of the DPF has the exhaust gas temperature between 250 and 500 degrees C, and the automatic regeneration zone has a temperature over 500 degrees C. In the exemplary example of the present invention, the exhaust gas temperature often becomes a continuous regeneration-possible temperature (i.e., 250 degrees C or more). Thus, it is possible to extend the automatic regeneration interval of the DPF.

Also, the exemplary example of the present invention can reduce the time needed for the temperature to rise to a predetermined (desired) temperature as compared to the conventional arrangement, as shown in Fig. 5.

As understood from the foregoing, with the above-described superiorities, the exemplary example of the present invention can increase the frequency of the DPF continuous regeneration (the DPF inlet temperature being 250-500 degrees C) while performing the HC absorption control and the oxidation control on the DOC.

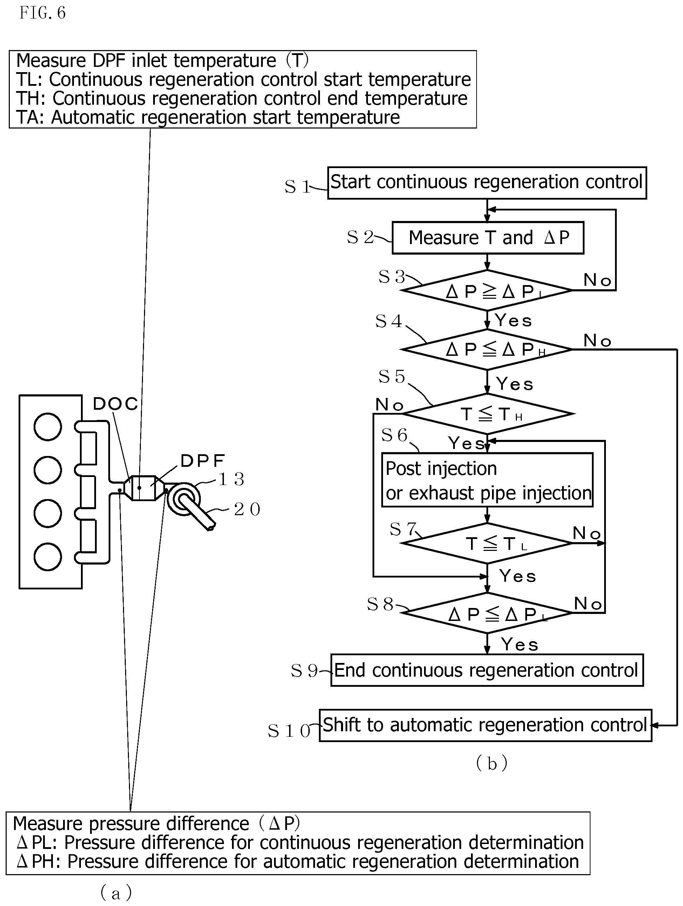

The flowchart of the continuous regeneration control will be described with reference to Fig. 6.

Firstly, as shown in Fig. 6(a), the pressure difference (ΔP) between the DOC inlet and the DPF outlet is measured, and then the pressure difference (ΔP_{L}) for continuous regeneration determination and the pressure difference (ΔP_{H}) for automatic regeneration determination are decided from the pressure difference ΔP. Also, the temperature at the DPF inlet (T) is measured, and then the start temperature (T_{L}) for continuous regeneration control, the end temperature (T_{H}) for continuous regeneration control, and the start temperature (T_{A}) for automatic regeneration are decided.

These pressure differences and the decided temperatures are used as shown in Fig. 6(b). At Step S1 the continuous regeneration control starts, and at Step S2 the temperatures T and the pressure differences ΔP are measured. At Step S3 it is determined whether or not ΔP ≥ ΔP_{L}. When it is determined at Step S3 that the pressure difference (ΔP) is lower than the continuous regeneration determination pressure difference (ΔP_{L}) (No at Step S3), the measurement of the temperatures T and the pressure differences ΔP is continuously performed at Step S2. When it is determined at Step S3 that the pressure difference (ΔP) is equal to or greater than the continuous regeneration determination pressure difference (ΔP_{L}) (Yes at Step S3), then it is determined at Step S4 whether or not ΔP ≤ ΔP_{H}. When it is determined at Step S4 that the pressure difference (ΔP) is equal to or lower than the automatic regeneration determination pressure difference (ΔP_{H}), then it is determined at Step S5 whether or not T ≤ T_{H}. When it is determined at Step S5 that the DPF inlet temperature (T) is equal to or lower than the continuous regeneration control finishing temperature (T_{H}) (Yes at Step S5), the post injection (or the exhaust pipe injection) is carried out at Step S4 to elevate the exhaust gas temperature for continuous regeneration. Subsequently, it is determined at Step S7 whether or not T ≤ T_{L}. When it is determined at Step S7 that the temperature T is lower than the temperature T_{L}, then the post injection is continuously performed at Step S6 for continuous regeneration. When it is determined at Step S7 that the temperature T is higher than the continuous regeneration control start temperature T_{L} (Yes at Step S7), then it is determined at Step S8 whether or not ΔP ≤ΔP_{L}. When it is determined at Step S8 that the pressure difference (ΔP) is no smaller than the automatic regeneration determination pressure difference (ΔP_{L}) (No at Step S8), the post injection is carried out again at Step S6 for continuous regeneration. When it is determined at Step S8 that the pressure difference (ΔP) is equal to or smaller than the automatic regeneration determination pressure difference (ΔP_{L}) (Yes at Step S8), the continuous regeneration control is finished at Step S9.

When it is determined at Step S5 that the DPF inlet temperature (T) exceeds the continuous regeneration control finishing temperature (T_{H}) (No at Step S5), the determination is made on the pressure difference (ΔP) at Step S8. Although not shown in the drawing, Step S5 may determine whether the temperature exceeds the continuous regeneration control finishing temperature (T_{H}) and further exceeds the automatic regeneration start temperature (T_{A}). If the answer is yes, then Step S8 may not be performed and Step S10 (automatic regeneration control) may be performed.

When it is determined at Step S4 that the pressure difference (ΔP) exceeds the automatic regeneration determination pressure difference (ΔP_{H}), the automatic regeneration control is immediately initiated at Step S10.

In the above-described control flow, the DPF inlet temperature frequently exceeds 250 degrees C in the exemplary example of the present invention, as shown in Fig. 4. Therefore, the continuous regeneration control is enabled without the post injection. In this case, if the DOC contains a material that can absorb a large amount of CO, such as CeO₂ and ZrO₂, it is possible to further increase the heat generation of the DOC.

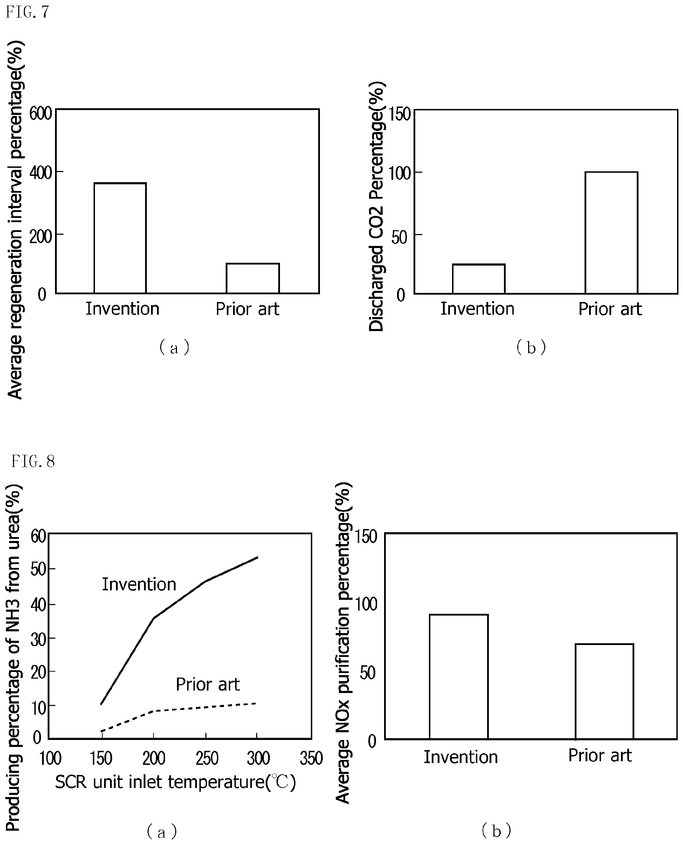

As understood from the foregoing, the exemplary example of the present invention can have a significantly larger interval for the automatic regeneration than the conventional arrangement, as shown in Fig. 7(a). Also, the exemplary example of the present invention can reduce an amount of fuel consumed during the DPF regeneration, as shown in Fig. 7(b), and therefore can reduce an amount of CO₂ discharged.

Now, the purification capability of the SCR unit of the exemplary example of the present invention will be compared to the conventional arrangement.

In the conventional arrangement, a distance of at least 25 mm is needed from the urea spraying position to the SCR unit inlet in order to spray and disperse urea uniformly.

On the other hand, the DOC in the embodiment in figure 1 only includes the DOC 31 associated with the respective cylinders between the exhaust ports and the exhaust manifold; the DOC 31p associated with the respective cylinders and the downstream DOC 31t situated upstream of the turbocharger 13 is shown in Fig. 2.

The configuration shown in Fig. 1 that only includes the DOC 31 as the DOC may be satisfactory depending upon the exhaust temperature and the HC/CO concentration. If the HC and CO concentrations are high, each upstream DOC 31p may include a catalyst that contains a material (e.g., CeO₂ and ZrO₂) having the OSC and an oxidation semiconductor. The OSC is excellent in CO purification, and the catalyst is located in the upstream flow of the exhaust gas. The downstream DOC 31t may include a Pt catalyst, which is excellent in HC purification. This arrangement of the upstream and downstream DOC provides a catalyst configuration that is excellent in low temperature activation.

In the embodiments of the present invention, the exhaust gas that is recirculated by the high-pressure EGR pipe 21H branches from the exhaust pipe (exhaust manifold 12) downstream of the DOC 31, 31p and upstream of the urea spraying position. Because the exhaust gas which passes through the DOC 31, 31p is recirculated, it is possible to reduce the SOF in the exhaust gas and regulate (restrict) the influences of the SOF such as clogging of the EGR cooler 22H and the EGR valve 23H.

The exhaust gas which is recirculated by the low-pressure EGR pipe 21L branches from the exhaust pipe downstream of the SCR unit 34, passes through the compressor 14 of the turbocharger 13 such that the exhaust gas is pressurized together with the intake air, and is recirculated to the diesel engine 10. Because the exhaust gas which passes through the DOC 31 (31p and 31t), the DPF 32 (32t) and the SCR unit 34 is recirculated, it is possible to reduce the SOF, the PM and NH₃ in the exhaust gas and regulate (restrict) clogging, corrosion and the like of the EGR cooler 22L and the EGR valve 23L.

Advantages obtained by spraying urea upstream of the DPF will now be described.

When the urea spraying nozzle 33, 33t is installed upstream of the DPF 32, 32t, the sprayed urea is stirred and spreads in the turbocharger 13 such that the hydrolysis and thermal decomposition of urea is facilitated.

Therefore, the distance from the urea spraying nozzle 33, 33t to the SCR unit 34 can be reduced. In addition, the sprayed urea is more uniformly dispersed in the exhaust pipe downstream of the turbocharger 13. Because the DPF outlet temperature can be maintained 100 degrees C higher (or much higher) than the conventional arrangement as shown in Fig. 4, the generation percentage of NH₃ from urea is increased as indicated in Fig. 8(a) and Fig. 8(b). In the JE05 mode average, the NOx purification percentage of the SCR unit is improved 30% or more.

The embodiment of the present invention takes advantage of high EGR combustion and the following reaction to restrict (suppress) the corrosion of the exhaust pipe and the turbine with SOx.

Firstly, NH₃, SO₄ and another element react with each other to produce (NH₄)₂SO₄.

2NH₃ + H₂O + SO₃ → (NH₄)₂SO₄

The resulting ammonium sulfate ((NH₄)₂SO₄) is a neutralized substance, and therefore there is no corrosion problem. The ash component (CaCO₃), which is obtained after the PM is burned in the downstream DPF, and (NH₄)₂SO₄ react with each other as shown below.

(NH₄)₂SO₄ + CaCO₃ → (NH₄)₂SO₃ + CaSO₄

The resulting ammonium carbonate ((NH₄)₂SO₃) causes the following thermal decomposition at a temperature of 58 degrees C or higher.

(NH₄)₂SO₃ → 2NH₃ + H₂O + CO₂

NH₃, which is produced by this thermal decomposition, is caught by the SCR unit downstream of the DPF and used for the NOx purification reaction.

The embodiment of the present invention can use a compact DPF that has a volume 50% (or more) smaller than the conventional configuration when the porosity of the DPF, the pore diameter of the DPF, and the wall thickness of the DPF are appropriately adjusted to provide the same purification capability and less pressure loss. In order to avoid the oxidation of urea that is sprayed before the DPF, a noble metal catalyst is not applied on the DPF. In this case, the DPF that is not applied with a catalyst is used, or the DPF that is applied with a large-basicity rare earth oxide-based catalyst or an alkaline earth oxide-based catalyst is used. When the DPF is applied with a hydrolytic catalyst, it is possible to further improve the NH3 generation percentage. As a result, the NOx purification percentage also improves (Fig. 9(a) and Fig. 9(b)).

In the present invention, a catalyst carrier (support) such as monolith catalyst may be used in the SCR unit to increase an amount of catalyst per unit specific volume. In this configuration, a compact SCR unit may be realized which is reduced 50% or more in size, as compared to a conventional device.

In the present invention, a DOC for NH₄ slip may be arranged downstream of the SCR unit depending upon an intended use of the exhaust gas purification device.

### EXPLANATION OF REFERENCE NUMERALS

10 diesel engine
13 turbocharger
30 exhaust path
31 DOC
32 DPF
33 urea spraying nozzle
34 SCR

## Claims

1. An exhaust gas purification device comprising:
an exhaust path (30) extending from an exhaust side of an engine (10) to a turbocharger (13) and an exhaust pipe (20) downstream of the turbocharger (13), wherein a plurality of exhaust ports (30p) of the engine (10) and an exhaust manifold (12) connected to the exhaust ports (30p) are provided on the exhaust path (30),
wherein the exhaust gas purification device comprises:
a plurality of upstream DOC (31p) provided on said plurality of exhaust ports (30p) of the engine (10), respectively;
a downstream DOC (31t) and a DPF (32t), the downstream DOC (31t) being located on the exhaust path (30) between the exhaust manifold (12) and the turbocharger (13);
a urea spraying nozzle (33t) located between the downstream DOC and the DPF; and
an SCR unit (34) provided on the exhaust pipe (20) downstream of the turbocharger (13),
**characterized in that** the DPF (32t) is located on the exhaust path (30) between the exhaust manifold (12) and the turbocharger (13),
wherein the DPF (32t) is integrally provided with the downstream DOC (31t), downstream of the downstream DOC (31t).

2. The exhaust gas purification device according to claim 1, wherein a catalyst layer in each of the upstream DOC (31p) includes a catalyst that contains a material having an OSC, and an oxide semiconductor, and a catalyst layer in the downstream DOC (31t) includes a metallic catalyst.

3. The exhaust gas purification device according to claim 1, wherein a catalyst layer in each of the upstream DOC (31p) includes a catalyst that contains a mixture of an oxide having an OSC and an oxide semiconductor, and a catalyst layer in the downstream DOC (31t) includes a catalyst that contains a mixture of an HC absorbing material and a noble metal catalyst.

4. The exhaust gas purification device according to claim 2 or 3, wherein the oxide having the OSC is an oxide containing Ce, and the oxide semiconductor is TiO₂, ZnO or Y₂O₃.

5. The exhaust gas purification device according to any one of claims 1 to 4, wherein the turbocharger (13) comprises:
a turbine (15) connected to the exhaust path (30); and
a compressor (14) connected to an intake path (16),
the exhaust gas purification device further comprising:
a high-pressure EGR pipe (21H) configured to return an exhaust gas from the exhaust manifold (12) to an intake side of the engine (10); and
a low-pressure EGR pipe (21L) configured to return the exhaust gas from downstream of the SCR unit (34) to an intake side of the compressor (14) of the turbocharger (13).

## Patentansprüche

1. Abgasreinigungsvorrichtung, umfassend:
einen Auslasspfad (30), der sich von einer Auslassseite eines Motors (10) zu einem Turbolader (13) und einem Auspuffrohr (20) stromabwärts des Turboladers (13) erstreckt, wobei eine Vielzahl von Auslassöffnungen (30p) des Motors (10) und ein mit den Auslassöffnungen (30p) verbundener Auspuffkrümmer (12) an dem Auslasspfad (30) vorgesehen sind,
wobei die Abgasreinigungsvorrichtung umfasst:
eine Vielzahl von stromaufwärts gelegenen DOC (31p), die jeweils an der Vielzahl von Auslassöffnungen (30p) des Motors (10) vorgesehen sind;
ein stromabwärts gelegener DOC (31t) und ein DPF (32t), wobei der stromabwärts gelegene DOC (31t) an dem Auslasspfad (30) zwischen dem Auspuffkrümmer (12) und dem Turbolader (13) vorgesehen ist;
eine Harnstoffsprühdüse (33t), die zwischen dem stromabwärts gelegenen DOC (31t) und dem DPF angeordnet ist; und
eine SCR-Einheit (34), die an dem Auslassrohr (20) stromabwärts des Turboladers (13) vorgesehen ist,
**dadurch gekennzeichnet, dass** der DPF (32t) an dem Auslasspfad (30) zwischen dem Auspuffkrümmer (12) und dem Turbolader (13) angeordnet ist,
wobei der DPF (32t) integral mit dem stromabwärts gelegenen DOC (31t) stromabwärts des stromabwärts gelegenen DOC (31t) vorgesehen ist.

2. Abgasreinigungsvorrichtung nach Anspruch 1, wobei eine Katalysatorschicht in jedem der stromaufwärts gelegenen DOC (31p) einen Katalysator einschließt, der ein Material mit einer SSF enthält, sowie einen Oxid-Halbleiter, und eine Katalysatorschicht in dem stromabwärts gelegenen DOC (31t) einen Metallkatalysator enthält.

3. Abgasreinigungsvorrichtung nach Anspruch 1, wobei eine Katalysatorschicht in jedem der stromaufwärts gelegenen DOC (31p) einen Katalysator einschließt, der eine Mischung aus einem Oxid mit einer SSF und einen Oxid-Halbleiter enthält, und eine Katalysatorschicht in dem stromabwärts gelegenen DOC (31t) einen Katalysator einschließt, der eine Mischung aus einem Kohlenwasserstoff absorbierenden Material und einem Edelmetallkatalysator enthält.

4. Abgasreinigungsvorrichtung nach Anspruch 2 oder 3, wobei das Oxid mit der SSF ein Oxid ist, das Ce enthält, und der Oxid-Halbleiter TiO₂, ZnO oder Y₂O₃ ist.

5. Abgasreinigungsvorrichtung nach einem der Ansprüche 1 bis 4, wobei der Turbolader (13) umfasst:
eine Turbine (15), die mit dem Auslasspfad (30) verbunden ist; und
einen Kompressor (14), der mit einem Einlasspfad (16) verbunden ist,
wobei die Abgasreinigungsvorrichtung ferner umfasst:
ein Hochdruck-Abgasrezirkulationsrohr (21H), das ausgebildet ist, um ein Abgas aus dem Auspuffkrümmer (12) zu einer Einlassseite des Motors (10) zurückzuführen; und
ein Niederdruck-Abgasrezirkulationsrohr (21L), das ausgebildet ist, um das Abgas von stromabwärts der SCR-Einheit (34) zu einer Einlassseite des Kompressors (14) des Turboladers (13) zurückzuführen.

## Revendications

1. Dispositif de purification de gaz d'échappement comprenant :
un passage d'échappement (30) qui s'étend entre un côté échappement d'un moteur (10) et un turbocompresseur (13) et un tuyau d'échappement (20) en aval du turbocompresseur (13), dans lequel une pluralité d'orifices d'échappement (30p) du moteur (10) et un collecteur d'échappement (12) raccordé aux orifices d'échappement (30p) sont fournis sur le passage d'échappement (30),
dans lequel le dispositif de purification de gaz d'échappement comprend :
une pluralité de DOC (31p) amont disposés sur ladite pluralité d'orifices d'échappement (30p) du moteur (10), respectivement ;
un DOC (31t) aval et un DPF (32t), le DOC (31t) aval étant installé sur le passage d'échappement (30) entre le collecteur d'échappement (12) et le turbocompresseur (13) ;
une buse de pulvérisation d'urée (33t) installée entre le DOC aval et le DPF ; et
une unité SCR (34) installée sur le tuyau d'échappement (20) en aval du turbocompresseur (13),
**caractérisé en ce que** le DPF (32t) est installé sur le passage d'échappement (30) entre le collecteur d'échappement (12) et le turbocompresseur (13),
dans lequel le DPF (32t) est agencé de manière solidaire avec le DOC (31t) aval, en aval du DOC (31t) aval.

2. Dispositif de purification de gaz d'échappement selon la revendication 1, dans lequel une couche de catalyseur dans chacun des DOC (31p) amont inclut un catalyseur qui contient un matériau ayant une OSC, et un oxyde semi-conducteur, et une couche de catalyseur dans le DOC (31t) aval inclut un catalyseur métallique.

3. Dispositif de purification de gaz d'échappement selon la revendication 1, dans lequel une couche de catalyseur dans chacun des DOC (31p) amont inclut un catalyseur qui contient un mélange d'un oxyde ayant une OSC et un oxyde semi-conducteur, et une couche de catalyseur dans le DOC (31t) aval inclut un catalyseur qui contient un mélange d'un matériau absorbant les HC et un catalyseur de métal noble.

4. Dispositif de purification de gaz d'échappement selon la revendication 2 ou 3, dans lequel l'oxyde ayant l'OSC est un oxyde contenant du Ce, et l'oxyde semi-conducteur est Ti0₂, ZnO ou Y₂O₃.

5. Dispositif de purification de gaz d'échappement selon l'une quelconque des revendications 1 à 4, dans lequel le turbocompresseur (13) comprend :
une turbine (15) raccordée au passage d'échappement (30) ; et
un compresseur (14) raccordé à un passage d'admission (16),
le dispositif de purification de gaz d'échappement comprenant en outre :
un tuyau EGR à haute pression (21H) configuré pour renvoyer un gaz d'échappement du collecteur d'échappement (12) vers un côté admission du moteur (10) ; et
un tuyau EGR à basse pression (21L) configuré pour renvoyer un gaz d'échappement SCR (34) vers un côté admission du compresseur (14) du turbocompresseur (13).
